# EUROPÄISCHE PATENTSCHRIFT

(11) **EP 2 118 532 B1**
(45) Veröffentlichungstag und Bekanntmachung des Hinweises auf die Patenterteilung: **15.09.2010**
(21) Anmeldenummer: 08701282.9
(22) Anmeldetag: 08.01.2008
(51) Int. Cl.: F16H 63/30, F16H 63/34

(54) **KRAFTFAHRZEUGGETRIEBE MIT EINER ENTRIEGELUNGSEINRICHTUNG**
MOTOR VEHICLE TRANSMISSION WITH AN UNLOCKING DEVICE
BOÎTE DE VITESSES DE VÉHICULE AUTOMOBILE AVEC UN DISPOSITIF DE DÉVERROUILLAGE

(30) Priorität: 17.02.2007 DE 102007008088
(43) Veröffentlichungstag der Anmeldung: 18.11.2009
(73) Patentinhaber: ZF Friedrichshafen AG, 88038 Friedrichshafen (DE)
(72) Erfinder: KÖNIG, Jan-Peter, 14550 Brandenburg (DE); WERDIN, Philipp, 13467 Berlin (DE)
(86) Internationale Anmeldenummer: PCT/EP2008/050106
(87) Internationale Veröffentlichungsnummer: WO 2008/098800

(56) Entgegenhaltungen:
- WO-A-03/056213
- DE-A1- 10 105 637
- DE-A1- 19 643 812
- DE-A1- 19 848 733
- JP-A- 2007 016 949

## Beschreibung

Die Erfindung betrifft ein Kraftfahrzeuggetriebe zur Kraftübertragung zwischen einem Antriebsmotor und einer Antriebsachse in verschiedenen Fahrstufen, wobei die Fahrstufen über ein in einer Schaltrichtung verschiebbares Schaltelement einlegbar sind, und mit einer Entriegelungseinrichtung zum Auslegen des Schaltelements.

Kraftfahrzeuggetriebe sind in verschiedenen Ausführungsformen in der Kraftfahrzeugtechnik bekannt. Mit ihnen wird eine Drehbewegung eines Antriebsmotors, beispielsweise eine Verbrennungskraftmaschine, ein Elektromotor oder ein Hybridantriebsmaschine, auf eine oder mehrere Antriebsachsen des Kraftfahrzeugs übertragen. Hierzu kann das Kraftfahrzeuggetriebe in verschiedenen Fahrstufen oder Gängen mit unterschiedlichen Übersetzungsverhältnissen für die Vorwärtsfahrt sowie mindestens in einem Rückwärtsgang betrieben werden, sowie in einer Neutralstellung, in der kein Kraftschluss zwischen der Antriebsachse und dem Antriebsmotor besteht. Zum Einlegen eines gewünschten Getriebegangs dient üblicherweise ein Schaltelement, beispielsweise in Form einer Schiebemuffe. Mit einem solchen Schaltelement kann ein drehbar auf einer Getriebewelle angeordnetes Zahnrad mit dieser Getriebewelle drehfest verbunden werden, um so in einer bestimmten Übersetzungsstufe die Weiterleitung eines Antriebsdrehmomentes im Getriebe zu ermöglichen.

Zur fahrerseitigen Auswahl von Schaltgassen und zum Einlegen der Gänge dient bei einem manuellen Schaltgetriebe bekanntermaßen ein Schalthebel, der vom Fahrer des Kraftfahrzeugs bedienbar ist. Der Schalthebel ist über Schaltstangen oder Bowdenzüge beispielsweise mit einer axial verschiebbaren und um ihre Längsachse drehbaren Schaltwelle verbunden, deren Schaltgabeln oder Schaltschwingen wahlweise in die den einzelnen Gängen zugeordneten Schiebemuffen eingreifen. Bei automatisierten Schaltgetrieben erfolgt die Betätigung der Schaltwelle zur Auswahl und zum Ein- bzw. Auslegen der Gänge mittels Aktuatoren, die von einem Getriebesteuerungsgerät ansteuerbar sind. Bei einem Automatikgetriebe erfolgt das Anwählen verschiedener Fahrstufen in der Wählhebelstellung "D" eines Wählhebels im Fahrgastraum selbsttätig in Abhängigkeit von der Motordrehzahl, der Fahrpedalstellung und anderer Parameter.

Von Automatikgetrieben ist es weiterhin bekannt, dass diese über eine so genannte Parksperre verfügen, die mit dem Wählhebel in der Wählhebelstellung "P" eingelegt wird, um das Automatikgetriebe zu blockieren, so dass das Kraftfahrzeug beispielsweise an einem Hang nicht zurückrollen kann.

Sollte während des normalen Fahrbetriebs des Kraftfahrzeugs oder bei einem abgestellten Kraftfahrzeug mit manuellem oder automatisierten Schaltgetriebe im abgestellten Zustand mit eingelegtem Gang, oder bei einem Automatikgetriebe mit eingelegter Parksperre, ein Defekt auftreten, gemäß dem ein eingelegte Gang nicht mehr ausgelegt bzw. die Parksperre nicht mehr gelöst werden kann, und somit der Antriebsmotor kraftschlüssig mit der Antriebsachse verbunden ist oder ein Getriebezahnrad des Automatikgetriebes gegen das Getriebegehäuse festgelegt ist, so ist eine Entriegelungseinrichtung notwendig, mit der das Schaltelement bzw. der Gang ausgelegt oder die Parksperre entriegelt werden kann. Nach einem solchen gesonderten Auslegen des Gangs bzw. einer solchen Entriegelung kann das Kraftfahrzeug einfach abgeschleppt werden, ohne dass die Antriebsachse des Kraftfahrzeugs angehoben werden muss. Eine solche Entriegelungseinrichtung ist aus dem Dokument JP-A-2007/016949, welches alle Merkmale des oberbegriffs des Anspruchs 1 offenbart, bekannt.

Hierzu offenbart die DE 197 49 681 A1 eine Vorrichtung zur Betätigung eines Getriebes. Bei dieser Vorrichtung kann mit einem Betätigungsaktor auf ein Getriebeeingangselement eingewirkt werden, um beispielsweise eine Getriebeübersetzung auszuwählen und einzulegen. Zur Aufhebung des Kraftschlusses kann eine Verbindung zwischen diesem Betätigungsaktor und dem Getriebeeingangselement gelöst werden, und nach Behebung des Defekts diese Verbindung wieder hergestellt werden. Beispielsweise kann gemäß der dortigen Fig. 12 an einer Schaltwelle des Kraftfahrzeuggetriebes ein Hebel drehfest angeordnet sein, der über einen Bowdenzug betätigt wird, wobei der Bowdenzug in einen Fahrzeuginnenraum geführt sein kann. Tritt ein Defekt auf, so kann durch Betätigen des Hebels an dem Bowdenzug gezogen werden, um die Schaltwelle in eine Neutralstellung zu bringen, so dass auch im Getriebe der aktuelle Gang ausgelegt wird.

Weiterhin offenbart die DE 43 04 250 C1 eine Fahrstufenwähleinrichtung für ein automatisches Kraftfahrzeuggetriebe. Dieses Getriebe verfügt über einen drehbaren Entriegelungshebel, der über einen Bowdenzug gedreht werden kann und auf eine Schwinge einwirkt, so dass diese Schwinge in eine Neutralstellung gebracht wird. Mit dieser Schwinge als Schaltelement kann eine Wählwelle bewegt werden, um über die Wählwelle verschiedene Fahrstufen einzulegen, beispielsweise die Neutralstellung des Getriebes.

Als nachteilig bei den bekannten Kraftfahrzeuggetrieben mit Entriegelungseinrichtung ist es anzusehen, dass die verwendeten zusätzlichen Bowdenzüge und Betätigungselemente, mit denen ein Schaltelement bzw. ein Gang ausgelegt wird, die Herstellkosten des Getriebes bzw. des Fahrzeugs erhöhen. Der Bowdenzug und ein im Fahrzeuginnenraum angeordneter Entriegelungshebel beanspruchen zudem nachteilig zusätzlichen Bauraum. Weitere not fall entriegelungseinrichtungen für Getriebe sind aus den Dokumenten WO-A-03/056213 und DE - A1-19643812 bekannt.

Der Erfindung liegt die Aufgabe zugrunde, ein Kraftfahrzeuggetriebe der Eingangs genannten Art zu schaffen, das bei einem Defekt mit einer einfach aufgebauten Entriegelungseinrichtung zuverlässig in seine Neutralstellung gebracht werden kann.

Diese Aufgabe wird durch die Merkmale des Hauptanspruchs gelöst. Vorteilhafte Weiterbildungen und Ausgestaltungen der Erfindung sind den Unteransprüchen entnehmbar.

Demnach geht die Erfindung aus von einem Kraftfahrzeuggetriebe zur Kraftübertragung zwischen einem Antriebsmotor und einer Antriebsachse in verschiedenen Gängen oder Fahrstufen, wobei die Gänge oder Fahrstufen über ein in einer Schaltrichtung verschiebbares Schaltelement einlegbar sind, und mit einer Entriegelungseinrichtung zum Auslegen des Schaltelements. Erfindungsgemäß ist die Entriegelungseinrichtung als Betätigungselement ausgeführt, das in einer Zustellrichtung Z im Wesentlichen quer zur Schaltrichtung S auf das Schaltelement zustellbar ist, wobei eine Betätigungsfläche am Betätigungselement und eine Wirkfläche am Schaltelement zusammenwirken, um das Schaltelement auszulegen.

Mit einem erfindungsgemäß ausgebildeten Betätigungselement, das eine Betätigungsfläche aufweist, kann durch das Zustellen des Betätigungselements im Wesentlichen quer zur Schalt- oder Bewegungsrichtung des Schaltelements unmittelbar auf dieses eingewirkt werden. Hierzu wirkt die Betätigungsfläche des Betätigungselements mit einer korrespondierend ausgebildeten Wirkfläche am Schaltelement zusammen, so dass durch die Krafteinwirkung des Betätigungselements auf das Schaltelement dieses entgegengesetzt zur Einschaltrichtung verschoben wird, um somit einen eingelegten Gang bzw. eine Fahrstufe auszulegen und das Kraftfahrzeuggetriebe in seine Neutralstellung zu bringen.

Die Betätigungsfläche am Schaltelement ist in Bezug zur Wirkfläche am Schaltelement derart positioniert und dimensioniert, dass auch bei einem eingelegten Gang das Zusammenwirken mit der Betätigungsfläche des Betätigungselements gewährleistet ist, um den jeweiligen Gang auslegen zu können.

Die Entriegelungseinrichtung gemäß der Erfindung kann bei einem Automatikgetriebe, beispielsweise ausgebildet als Stufenautomatgetriebe mit Planetenradsätzen, auch zur Notentriegelung einer Parksperreinrichtung vorgesehen sein, bei der zur Verriegelung der Parksperre ein getriebegehäusefestes Sperrelement in eine Verzahnung eines Parksperrzahnrades eingreift und dieses so festlegt. Zur Notentriegelung drückt das erfindungsgemäße Betätigungselement das Sperrelement aus der Sperrverzahnung heraus, um diese Sperrverzahnung durch ein Zurückziehen anschließend wieder freizugeben.

Ferner ist in einer ersten Ausführungsform das Betätigungselement als im Wesentlichen zylindrischer Stift mit einem Konus beziehungsweise einem Kegelkopf an seiner Spitze ausgebildet, der seinerseits axial bewegbar in einer Hülse angeordnet ist. Die Hülse wird an geeigneter Stelle in einer korrespondierenden Ausnehmung im Getriebegehäuse eingesetzt und befestigt. Prinzipiell könnte die Hülse in der Ausnehmung angeschweißt werden. Bevorzugt wird die Hülse über eine Verschraubung festgelegt, um die Montage zu erleichtern und um beispielsweise ein beschädigtes Bauteil austauschen zu können. Zum Entriegeln des Kraftfahrzeuggetriebes wird der Stift in einfacher Weise manuell axial in das Getriebe eingedrückt, so dass er auf das Schaltelement einwirkt.

In einer dazu alternativen Ausführungsform ist das Betätigungselement als im Wesentlichen zylindrische Schraube ausgeführt, die zum Ausgelegen eines Gangs unmittelbar in ein Gewinde im Getriebegehäuse einschraubbar ist. Es versteht sich, dass das Gewinde ausreichend dimensioniert ist, um die nötigen Zustellkräfte zum Auslegen des Schaltelements aufnehmen zu können. Es ist möglich, dass die Schraube mit einer Handhabe versehen ist, um diese unmittelbar mit der Hand ein- und/oder ausdrehen zu können. Bevorzugt verfügt sie aber beispielsweise über einen Innensechskantaufnahme und/oder eine Außensechskantgeometrie, um mit entsprechenden Werkzeugen trotz beengter Verhältnisse im Getrieberaum des Fahrzeugs betätigt zu werden.

Der Vorteil der Erfindung besteht darin, dass durch das einfache translatorische Bewegen eines Betätigungselements, das bevorzugt wie im Folgenden beschrieben an einem Getriebegehäuse angeordnet ist, ein eingelegter Gang ausgelegt bzw. eine Parksperreinrichtung notentriegelt werden kann, um somit das Kraftfahrzeug mit rollenden Rädern der Antriebsachse abschleppen zu können. Dadurch wird eine mögliche Schädigung des Antriebsstrangs beim Abschleppen vermieden. Das Betätigen des Betätigungselements kann dabei entweder durch einen Mechaniker oder vom Fahrer selbst durchgeführt werden.

Vorzugsweise ist die Betätigungsfläche als Konus an einer Spitze des Betätigungselements ausgeführt und die Wirkfläche am Schaltelement als korrespondierende trichterartige Vertiefung im Schaltelement, in die der Konus beim Zustellen des Betätigungselements in Eingriff gebracht wird. Durch die gegen die Bewegungsrichtung des Betätigungselements geneigten Ausrichtungen der Betätigungs- und Wirkfläche ist zuverlässig gewährleistet, dass durch die Zustellbewegung des Betätigungselements eine ausreichende Kraftübertragung auf das Schaltelement erfolgt, so dass dieses in Schaltrichtung zurückgeschoben und ein eingelegter Gang ausgelegt wird. Gegebenenfalls können diese Oberflächen bei metallischen Bauteilen auch eigens gehärtet sein. Abhängig von den aufzubringenden Kräften und Zustellwegen kann jeweils ein bevorzugter Neigungswinkel des Konus bzw. ein bevorzugter Öffnungswinkel der Vertiefung gewählt werden. Konus und Vertiefung können alternativ dazu jeweils auch am anderen Bauteil angeordnet sein, falls dies erforderlich sein sollte.

Um ein unabsichtliches Zustellen auf das Schaltelement zu vermeiden, ist dem in einer Hülse bewegbarer Stift eine Feder zugeordnet, entgegen deren Federkraft der Stift eingedrückt werden muss. Mittels dieser Feder wird der Stift entgegen der Zustellrichtung weggedrückt, wobei die Federkraft derart gewählt wird, dass ein manuelles Zustellen oder Eindrücken des Bolzens möglich ist.

Weiterhin ist bevorzugt eine Arretierungseinrichtung vorgesehen, mit der der Stift in einer eingeschobenen oder zugestellten Position gehalten wird, um den Konus auch während eines Abschleppens in der Vertiefung zu fixieren. Eine mechanische Arretierungseinrichtung kann in an sich beliebiger Weise ausgestaltet sein.

Um eine definierte Ausgangsposition für das als schraube ausgeführte Betätigungselement zu erhalten, ist diese mit einer Anschlagscheibe versehen, die radial über die im Wesentlichen zylindrische Schraube übersteht. Bei der Montage des Getriebes wird diese Schraube bis zu der Anschlagscheibe, die quasi als Anschlagsfläche dient, mit einem vergleichsweise geringen Drehmoment in das Gewinde des Getriebegehäuses eingedreht, so dass der feste Sitz dieser Schraube gewährleistet ist und die Schraube das Schaltelement noch nicht berührt.

Die Anschlagscheibe kann einstückig mit der eigentlichen Schraube ausgeführt sein, wobei beim weiteren Eindrehen der Schraube, nunmehr mit einem höheren Drehmoment, die Anschlagscheibe entweder abreißt oder zumindest verformt wird. Soll die Anschlagscheibe definiert abreißen, ist vorzugsweise eine Sollbruchstelle ausgebildet. Soll die Anschlagscheibe lediglich verformt werden, muss sie mit einer ausreichend dünnen Materialstärke ausgeführt sein.

Alternativ hierzu kann die Anschlagscheibe mit dem Betätigungselement bzw. der Schraube verbunden sein, beispielsweise in Form einer aufgesteckten Gummitülle oder einer Anschlagscheibe aus Aluminiumschaum. Diese Bauteile werden miteinander verbunden und anschließend in das Getriebegehäuse eingeschraubt.

Schließlich kann die Anschlagscheibe auch als separates Bauteil, im Prinzip wie eine Unterlegscheibe, ausgeführt sein und beispielsweise beim Einschrauben der Schraube zwischen dieser und dem Getriebegehäuse fixiert werden. Hierzu ist vorzugsweise an der Schraube eine Anschlagschulter ausgebildet, um die Schraube so weit einzudrehen bis die Anschlagscheibe zwischen Getriebegehäuse und Anschlagschulter eingeklemmt ist.

Um unter anderem das Austreten von Getriebeöl aus dem Getriebegehäuse zu vermeiden, ist zusätzlich eine Dichtung vorgesehen, die beispielsweise in Form eines O-Rings aus Silikon zwischen einer Anschlagscheibe und dem Getriebegehäuse angeordnet ist. Prinzipiell kann auch für den Stift und die Hülse eine zusätzliche Dichtung vorgesehen sein. Dies ermöglicht auch das exakte Eindrehen der Schraube mit einem ersten, geringen Drehmoment.

Wie erwähnt, kann ein derartiges Betätigungselement sowohl an einem Automatikgetriebe als auch an einen manuell oder automatisiert zu betätigenden Schaltgetriebe eingesetzt werden, um einen eingelegten Gang auszulegen bzw. das Kraftfahrzeuggetriebe in seine Neutralstellung zu bringen. Bei einem Schaltgetriebe kann von dem Betätigungselement beispielsweise auf eine Schiebemuffe oder eine Schaltgabel eingewirkt werden und bei einem Automatikgetriebe wirkt das Betätigungselement mit einem anderen Schaltelement zusammen.

Selbstverständlich kann ein derartig ausgebildetes Getriebe mit einem Betätigungselement nicht nur in Kraftfahrzeugen eingesetzt werden, sondern auch auf allen anderen Gebieten der Technik.

Die Erfindung wird im Folgenden anhand der beiliegenden Zeichnung an mehreren Ausführungsbeispielen näher erläutert.

### Darin zeigt

- Fig. 1: einen Stift mit einem Schaltelement eines Getriebes,
- Fig. 2: eine als Betätigungselement ausgebildete Schraube mit einem Schaltelement eines Getriebes und
- Fig. 3: die als Betätigungselement ausgebildete Schraube gemäß Fig. 2 in einer vergrößerten Darstellung.

Sowohl manuell zu betätigende Schaltgetriebe als auch automatisierte Schaltgetriebe verfügen üblicherweise über zumindest ein Schaltelement 5 in Form einer Schaltmuffe, das auf einer Getriebewelle angeordnet und in einer Schaltrichtung S hin und her bewegbar ist, um in einer Gangeinlegstellung ein auf dieser Getriebewelle angeordnetes Losrad mit dieser drehfest verbinden zu können und um in einer Neutralstellung diese drehfeste Verbindung aufzuheben.

Tritt im Antriebsstrang des Kraftfahrzeugs ein relevanter Defekt auf, so ist es zum einfachen Abschleppen des Kraftfahrzeugs notwendig, dass der Kraftschluss zwischen den Rädern der Antriebsachse und dem Antriebsmotor unterbrochen wird. Hierzu wird in einfacher Weise das Kraftfahrzeuggetriebe in seine Neutralstellung gebracht. Falls dies aufgrund des Defektes nicht mehr möglich ist, also etwa beim Ausfall der Zentralelektrik des Fahrzeugs, erfolgt das Entriegeln bzw. das Ausrücken des Schaltelements 5 manuell mit Hilfe eines Betätigungselements gemäß der Erfindung.

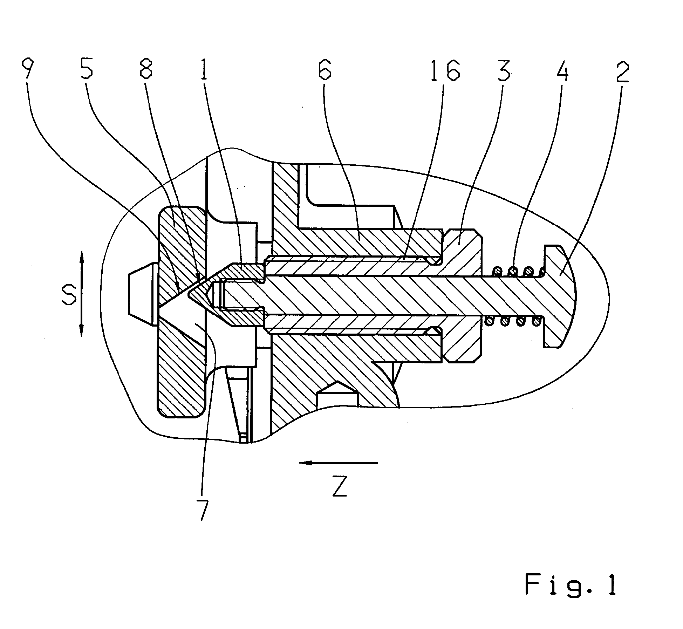

In den Fig. 1 ist eine erste Ausführungsform des Betätigungselements als Stift 2 dargestellt. Der Stift 2, vorzugsweise aus Metall, verfügt an seinem in das Getriebegehäuse 6 hineinragenden Ende über einen Konus 1 beziehungsweise einen Kegelkopf und ist relativ zu einer Hülse 3 in eine Zustellrichtung Z bewegbar, wie durch den Pfeil Z verdeutlicht ist. Die Hülse 3 ihrerseits ist über ein Gewinde 16 in dem Getriebegehäuse 6 eingeschraubt.

In der in Fig. 1 dargestellten zurückgezogenen Position wird der Stift 2 von einer Feder 4 entgegen der Zustellrichtung Z weggedrückt, so dass das Schaltelement 5 in der Schaltrichtung S zum Einlegen und Auslegen von zumindest einem Getriebegang hin und herbewegt werden kann, wie durch den Doppelpfeil S verdeutlicht ist.

Ist ein diesbezüglich relevanter Defekt aufgetreten, so kann der Stift 2 entgegen der Kraft der Feder 4 in Zustellrichtung Z in das Getriebegehäuse 6 manuell eingedrückt werden, so dass der Konus 1 mit einer Vertiefung 7 im Schaltelement 5 in Eingriff gebracht wird. Dabei wird das Schaltelement 5 durch das Gleiten der Betätigungsfläche 8 des Kegelkopfes 1 an der Wirkfläche 9 der Vertiefung 7 gemäß Fig. 1 nach oben gedrückt, so dass ein gerade eingelegter Gang ausgelegt wird.

Um den Stift 2, beispielsweise während des Abschleppens des Fahrzeugs, konstant in seiner eingerückten Position zu halten, kann eine an sich beliebig gestaltbare und zur Vereinfachung der Darstellung hier nicht abgebildete Arretierungseinrichtung vorgesehen sein.

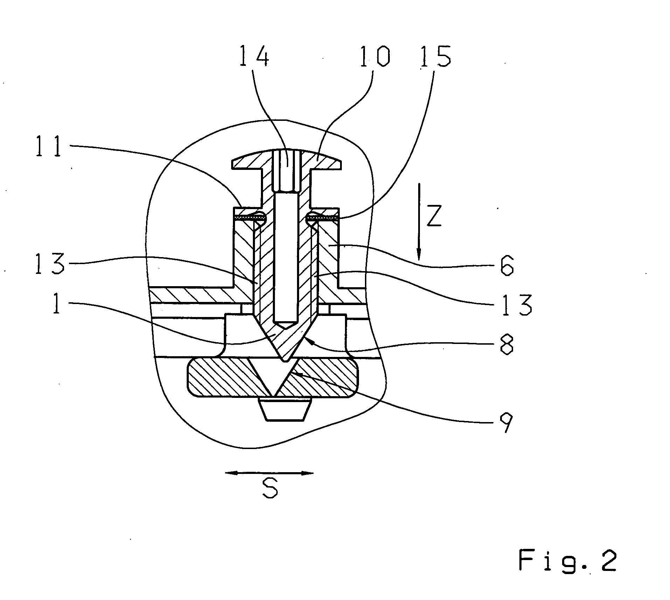

Eine dazu alternative Variante ist in Fig. 2 dargestellt. Als Betätigungselement dient hier eine im Wesentlichen zylindrische Schraube 10 mit einem Konus 1 an der Spitze. Die Schraube 10 ist mit einem entsprechend dimensionierten Gewinde 13 unmittelbar in das Getriebegehäuse 6 eingeschraubt. Zur Festlegung einer gewünschten Einschraubtiefe der Schraube 10 in das Getriebegehäuse 6 dient eine Anschlagscheibe 11, die im Wesentlichen kragenförmig die Schraube 10 durchgehend umgibt. Die Anschlagscheibe 11 kann einstückig mit der Schraube 10 ausgebildet sein oder als separates Bauteil.

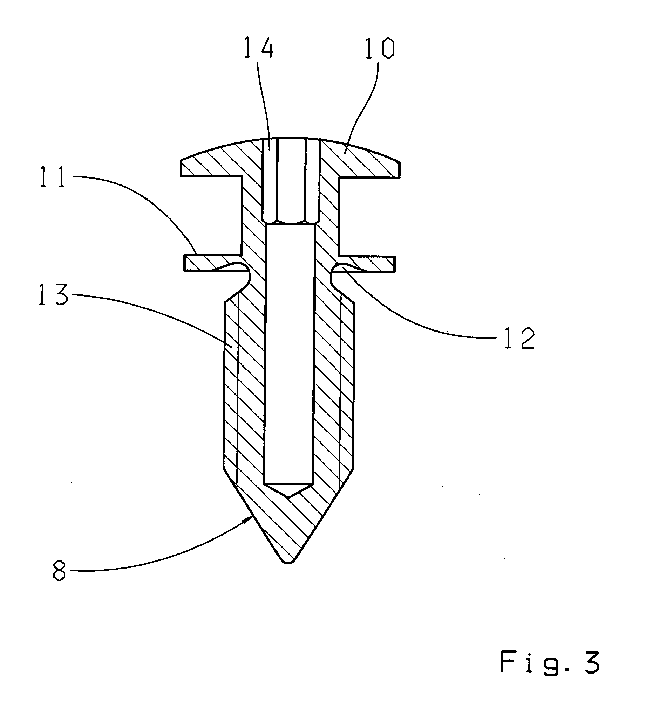

In der Darstellung gemäß Fig. 3 ist die Schraube 10 detaillierter dargestellt. So ist an der Anschlagscheibe 11 eine Sollbruchstelle 12 erkennbar, wodurch die Anschlagscheibe 11 beim weiteren Einschrauben der Schraube 10 in Zustellrichtung Z vom Schaft der Schraube 10 abreißt. Anschließend wird der Konus 1 oder Kegelkopf an der Spitze der Schraube 10 in die Vertiefung 7 des Schaltelements 5 bewegt und mit diesem in Eingriff gebracht. Dabei wirken ebenfalls wieder die Betätigungsfläche 8 und Wirkfläche 9 zusammen, um das Schaltelement 5 gemäß Fig. 2 von links nach rechts zu bewegen. Dabei wird der aktuell eingelegte Gang ausgelegt. Die Schraube 10 ist hier mit einer Innensechskantaufnahme 14 ausgestattet, um mit einem geeigneten Werkzeug verdreht zu werden.

Zusätzlich ist in Fig. 2 eine Dichtung 15 in Form eines O-Rings oder dergleichen zwischen der Anschlagscheibe 11 und dem Getriebegehäuse 6 angeordnet, um eine Abdichtung zu erhalten, so dass beispielsweise kein Getriebeöl austreten kann.

Sinnvollerweise ist jedem Schaltelement 5 bzw. jeder Schiebemuffe eine erfindungsgemäße Entriegelungseinrichtung zugeordnet.

Bezugszeichen
- 1: Konus
- 2: Stift
- 3: Hülse
- 4: Feder
- 5: Schaltelement
- 6: Getriebegehäuse
- 7: Vertiefung
- 8: Betätigungsfläche
- 9: Wirkfläche
- 10: Schraube
- 11: Anschlagscheibe
- 12: Sollbruchstelle
- 13: Gewinde
- 14: Innensechskantaufnahme
- 15: Dichtung
- 16: Gewinde

- S: Schaltrichtung des Schaltelements
- Z: Zustellrichtung des Betätigungselements

## Patentansprüche

1. Kraftfahrzeuggetriebe zur Kraftübertragung zwischen einem Antriebsmotor und einer Antriebsachse in verschiedenen Fahrstufen, wobei die Fahrstufen über ein in einer Schaltrichtung (S) verschiebbares Schaltelement (5) einlegbar sind, mit einer Entriegelungseinrichtung zum Auslegen des Schaltelements (5), wobei die Entriegelungseinrichtung als Betätigungselement ausgeführt ist, das in einer Zustellrichtung (Z) im Wesentlichen quer zur Schaltrichtung (S) auf das Schaltelement (5) zustellbar ist, wobei eine Betätigungsfläche (8) am Betätigungselement und eine Wirkfläche (9) am Schaltelement (5) zusammenwirken, um das Schaltelement (5) auszulegen, **dadurch ge** - **kennzeichnet**, dass das Betätigungselement als ein in einer Hülse (3) bewegbarer Stift (2) ausgebildet ist, wobei die Hülse (3) in ein Getriebegehäuse (6) eingesetzt und befestigt ist oder dass das Betätigungselement als Schraube (10) ausgeführt ist, die in ein Getriebegehäuse (6) einschraubbar ist.

2. Kraftfahrzeuggetriebe nach Anspruch 1, **dadurch gekennzeichnet, dass** das Betätigungselement einen Konus (1) und das Schaltelement (5) eine trichterförmige Vertiefung (7) aufweisen.

3. Kraftfahrzeuggetriebe nach Anspruch 1 oder 2, **dadurch gekennzeichnet, dass** das Betätigungselement als ein in einer Hülse (3) bewegbarer Stift (2) ausgebildet ist und der Stift (2) entgegen der Kraft einer Feder (4) in Zustellrichtung (Z) bewegbar ist.

4. Kraftfahrzeuggetriebe nach Anspruch 3, **dadurch gekenn** - **zeichnet**, dass eine Arretierungseinnchtung für den eingedrückten Stift (2) vorgesehen ist.

5. Kraftfahrzeuggetriebe nach Anspruch 1 oder 2, **dadurch gekenn** - **zeichnet**, dass das Betätigungselement als Schraube (10) ausgeführt ist, die in ein Getriebegehäuse (6) einschraubbar ist und dass die Schraube (10) über eine Anschlagscheibe (11) verfügt.

6. Kraftfahrzeuggetriebe nach Anspruch **dadurch gekennzeichnet, dass** die Anschlagscheibe (11) einstückig mit der Schraube (10) ausgebildet ist.

7. Kraftfahrzeuggetriebe nach Anspruch 6, **dadurch gekenn** - **zeichnet**, dass die Anschlagscheibe (11) abreißbar oder verformbar ist.

8. Kraftfahrzeuggetriebe nach Anspruch 5. **dadurch gekenn** - **zeichnet**, dass die Anschlagscheibe (11) mit der Schraube (10) lösbar verbunden ist.

9. Kraftfahrzeuggetriebe nach Anspruch 5, **dadurch gekenn** - **zeichnet**, dass die Anschlagscheibe (11) zwischen Schraube (10) und Getriebegehäuse (6) fixiert ist.

10. Kraftfahrzeuggetriebe nach zumindest einem der Ansprüche 1 bis 9, **dadurch gekennzeichnet, dass** das Kraftfahrzeuggetriebe ein Automatgetriebe oder ein manuell zu betätigendes Schaltgetriebe ist.

11. Kraftfahrzeuggetriebe nach zumindest einem der Ansprüche 1 bis 10, **dadurch gekennzeichnet , dass** für das Betätigungselement eine Dichtung vorhanden ist.

## Claims

1. Motor vehicle transmission for transmitting power between a drive engine and a drive axle in different drive positions, with the drive positions being selectable by means of a shift element (5) which is movable in a shift direction (S), having an unlocking device for disengaging the shift element (5), with the unlocking device being designed as an actuating element which can be fed toward the shift element (5) in a feed direction (Z) substantially perpendicular to the shift direction (S), with an actuating surface (8) on the actuating element and an active surface (9) on the shift element (5) interacting so as to disengage the shift element (5), **characterized in that** the actuating element is designed as a pin (2) which is movable in a sleeve (3), with the sleeve (3) being inserted into and fastened in a transmission housing (6), or **in that** the actuating element is designed as a screw (10) which can be screwed into a transmission housing (6).

2. Motor vehicle transmission according to Claim 1, **characterized in that** the actuating element has a cone (1) and the shift element (5) has a funnel-shaped depression (7).

3. Motor vehicle transmission according to Claim 1 or 2, **characterized in that** the actuating element is designed as a pin (2) which is movable in a sleeve (3), and the pin (2) is movable in the feed direction (Z) counter to the force of a spring (4).

4. Motor vehicle transmission according to Claim 3, **characterized in that** a latching device is provided for the pressed-in pin (2).

5. Motor vehicle transmission according to Claim 1 or 2, **characterized in that** the actuating element is designed as a screw (10) which can be screwed into a transmission housing (6), and **in that** the screw (10) has a stop disc (11).

6. Motor vehicle transmission according to Claim 5, **characterized in that** the stop disc (11) is formed in one piece with the screw (10).

7. Motor vehicle transmission according to Claim 6, **characterized in that** the stop disc (11) can be broken off or deformed.

8. Motor vehicle transmission according to Claim 5, **characterized in that** the stop disc (11) is releasably connected to the screw (10).

9. Motor vehicle transmission according to Claim 5, **characterized in that** the stop disc (11) is fixed between the screw (10) and transmission housing (6).

10. Motor vehicle transmission according to at least one of Claims 1 to 9, **characterized in that** the motor vehicle transmission is an automatic transmission or a manually-actuated shift transmission.

11. Motor vehicle transmission according to at least one of Claims 1 to 10, **characterized in that** a seal is provided for the actuating element.

## Revendications

1. Boîte de vitesses de véhicule automobile pour le transfert de forces entre un moteur d'entraînement et un axe d'entraînement dans différents rapports de transmission, les rapports de transmission pouvant être enclenchés par le biais d'un élément de changement de vitesse (5) déplaçable dans une direction de changement de vitesse (S), avec un dispositif de déverrouillage pour le désenclenchement de l'élément de changement de vitesse (5), le dispositif de déverrouillage étant réalisé sous forme d'élément d'actionnement qui peut être amené dans une direction d'avance (Z) essentiellement transversalement à la direction de changement de vitesse (S) sur l'élément de changement de vitesse (5), une surface d'actionnement (8) sur l'élément d'actionnement et une surface active (9) sur l'élément de changement de vitesse (5) coopérant l'une avec l'autre, afin de désenclencher l'élément de changement de vitesse (5), **caractérisée en ce que** l'élément d'actionnement est réalisé sous forme de goupille (2) déplaçable dans une douille (3), la douille (3) étant insérée et fixée dans un boîtier de boîte de vitesses (6) ou **en ce que** l'élément d'actionnement est réalisé sous forme de vis (10) qui peut être vissée dans un boîtier de boîte de vitesses (6).

2. Boîte de vitesses de véhicule automobile selon la revendication 1, **caractérisée en ce que** l'élément d'actionnement présente un cône (1) et l'élément de changement de vitesse (5) présente un renfoncement (7) en forme d'entonnoir.

3. Boîte de vitesses de véhicule automobile selon la revendication 1 ou 2, **caractérisée en ce que** l'élément d'actionnement est réalisé sous forme de goupille (2) déplaçable dans une douille (3), et la goupille (2) peut être déplacée à l'encontre de la force d'un ressort (4) dans la direction d'avance (Z).

4. Boîte de vitesses de véhicule automobile selon la revendication 3, **caractérisée en ce qu'**il est prévu un dispositif de blocage pour la goupille enfoncée (2).

5. Boîte de vitesses de véhicule automobile selon la revendication 1 ou 2, **caractérisée en ce que** l'élément d'actionnement est réalisé sous forme de vis (10) qui peut être vissée dans un boîtier de boîte de vitesses (6) et **en ce que** la vis (10) dispose d'une rondelle de butée (11).

6. Boîte de vitesses de véhicule automobile selon la revendication 5, **caractérisée en ce que** la rondelle de butée (11) est réalisée d'une seule pièce avec la vis (10).

7. Boîte de vitesses de véhicule automobile selon la revendication 6, **caractérisée en ce que** la rondelle de butée (11) peut être arrachée ou déformée.

8. Boîte de vitesses de véhicule automobile selon la revendication 5, **caractérisée en ce que** la rondelle de butée (11) est connectée de manière détachable à la vis (10).

9. Boîte de vitesses de véhicule automobile selon la revendication 5, **caractérisée en ce que** la rondelle de butée (11) est fixée entre la vis (10) et le boîtier de boîte de vitesses (6).

10. Boîte de vitesses de véhicule automobile selon au moins l'une quelconque des revendications 1 à 9, **caractérisée en ce que** la boîte de vitesses de véhicule automobile est une boîte de vitesses automatique ou une boîte de vitesses manuelle.

11. Boîte de vitesses de véhicule automobile selon au moins l'une quelconque des revendications 1 à 10, **caractérisée en ce que** l'on prévoit une garniture d'étanchéité pour l'élément d'actionnement.
